# EUROPÄISCHE PATENTANMELDUNG

(11) **EP 4 716 189 A1**
(43) Veröffentlichungstag der Anmeldung: **25.03.2026**
(21) Anmeldenummer: 24201398.5
(22) Anmeldetag: 19.09.2024
(51) Int. Cl.: H04L 67/12, G07C 5/08, H04L 67/561, G07C 5/00

(54) **KOMMUNIKATIONSBRÜCKE FÜR EINE FAHRZEUGSEITIGE BENUTZERSCHNITTSTELLE UND EINE OBD-SCHNITTSTELLE**

(71) Anmelder: Hella Gutmann Solutions GmbH, 79241 Ihringen (DE)
(72) Erfinder: Abraham, Heiko, 79241 Wasenweiler (DE); Frödrich, Matthias, 79312 Emmendingen (DE); Kolberg, Ralph, 79111 Freiburg im Breisgau (DE)
(74) Vertreter: Pfenning, Meinig & Partner mbB

(57) **Zusammenfassung**

Die Erfindung betrifft verschiedene Verfahren zur Kommunikation zwischen fahrzeugseitigen Steuergeräten und einer fahrzeugseitigen Benutzerschnittstelle, insbesondere Infotainment-System, wobei die Kommunikation durch ein mobiles Endgerät und eine Kommunikationsvorrichtung, insbesondere OBD-Dongle, vermittelt wird.

## Beschreibung

Die Erfindung betrifft verschiedene Verfahren zur Kommunikation zwischen fahrzeugseitigen Steuergeräten und einer fahrzeugseitigen Benutzerschnittstelle, insbesondere Infotainment-System, wobei die Kommunikation durch ein mobiles Endgerät und eine Kommunikationsvorrichtung, insbesondere OBD-Dongle, vermittelt wird.

Moderne Fahrzeuge sind komplexe elektrische und mechanische Systeme, die viele miteinander kommunizierende Komponenten verwenden, um einen sicheren und effizienten Fahrzeugbetrieb zu unterstützen. Derartige Komponenten können anfällig für Störungen, Ausfälle und Fehler sein, welche den Betrieb eines Fahrzeugs beeinträchtigen können. Wenn derartige Störungen, Ausfälle oder Fehler auftreten, kann die beeinträchtigte Komponente einen entsprechenden Fehlercode auslösen, zum Beispiel einen Diagnostic Trouble Code (DTC). Der Fehlercode wird in der Regel durch ein Fahrzeugsteuergerät erzeugt und in einem fahrzeugseitigen Speicher gespeichert. Hiernach kann je nach Schwere des Fehlers etwa ein Warnsignal oder eine Fehlermeldung ausgegeben werden, durch das der Fahrer veranlasst wird, eine Werkstatt aufzusuchen.

Die zunehmende Vernetzung von Steuergeräten in heutigen Kraftfahrzeugen bietet immer bessere Einwirkungsmöglichkeiten auf Funktionalitäten im Fahrzeug, z.B. bessere Diagnosemöglichkeiten im Fehlerfall oder Möglichkeiten zur Fernbedienung von Funktionen und/oder Komponenten des Fahrzeugs.

Mittels einer Auswertung des Fehlercodes kann eine Aussage darüber getroffen werden, welche Fahrzeugkomponenten fehlerbehaftet oder defekt sind, und zum Beispiel eine Reparatur benötigen. Zu dieser sogenannten Fahrzeugdiagnose ist üblicherweise eine Fahrzeugdiagnoseschnittstelle im Fahrzeug vorgesehen, welche oftmals im Fußraum beim Fahrer angeordnet ist.

Typischerweise wird ein externes Fahrzeugdiagnosegerät an die Fahrzeugdiagnoseschnittstelle angeschlossen, um die gespeicherten Fehlercodes auszulesen. Hiernach werden die Fehlercodes durch das Fahrzeugdiagnosegerät analysiert, um zu diagnostizieren, welche Komponenten repariert oder ersetzt werden müssen, um das Problem zu beheben. Im Werkstattalltag haben sich solche Fahrzeugdiagnosegeräte bewährt.

Selbst bei bekannten Fehlercodes ist es oft umständlich, auf die eigentliche Ursache der Fehlermeldung zu schließen. Wenn beispielsweise als Fehler eine erhöhte Kühlmitteltemperatur gemeldet wird, können die Fehlerursachen vielfältig sein, etwa ein Mangel an Kühlflüssigkeit aufgrund einer Undichtigkeit im Kühlsystem, ein mangelnder Flüssigkeitsdurchsatz aufgrund von Dampfblasen oder einer defekten Kühlmittelpumpe, oder eine Überhitzung aufgrund einer vorherigen Fahrzeugbelastung und klimatischen Bedingungen. Aus diesem Grund wird das Fahrzeug oftmals erstmal für eine Fahrzeugdiagnose zur Werkstatt gebracht, obwohl sich die Störursache manchmal sogar vor Ort beheben ließe. Es kann auch vorkommen, dass bei Ankunft in der Werkstatt festgestellt wird, dass dort die passenden Ersatzteile, das benötigte Werkzeug oder entsprechend geschulte Fachkräfte fehlen, um die Fehlerursache zu beheben. In diesem Fall wäre es besser gewesen, eine andere Werkstatt aufzusuchen, welche im Stande gewesen wäre, den Fehler zu beseitigen.

Es gibt auch Situationen, in welchen ein Fahrzeugdiagnosegerät nicht vorhanden ist oder in welchen geschultes Personal zur Auswertung oder Bedienung des Fahrzeugdiagnosegeräts fehlt. Wenn beispielsweise ein Fahrzeug im Pannenfall liegen bleibt, ist eine Fahrzeugdiagnose oder gar eine umfassende fahrzeugspezifische Fahrzeugdiagnose vor Ort oftmals nicht möglich. Auch bei Testfahrten in unzugänglichen Gebieten ist eine Fahrzeugdiagnose vor Ort nicht immer möglich. Während der Testfahrt tritt beispielsweise ein ungewöhnliches Verhalten auf, welches nur in einer ganz besonderen Fahrsituation vorkommt. Eine genaue Untersuchung durch einen Experten oder Entwickler wäre wünschenswert, der ist aber nur selten in der Nähe.

Weiter sind viele Fahrzeugdiagnose-Funktionen während des Betriebs des Fahrzeuges bzw. während der Fahrt aus Sicherheitsgründen nicht möglich bzw. nicht erlaubt, damit der Fahrer nicht abgelenkt wird und gefährliche Situationen entstehen können.

So ist es dem Fahrer nicht möglich, über das in vielen modernen Fahrzeugen eingebaute Infotainmentsystem Informationen wie Fehlercodes aus den Steuergeräten zu bekommen oder gar eine Fahrzeugdiagnose zu machen, weil der Fahrzeughersteller eine Verbindung des Infotainmentsystems mit der Diagnoseschnittstelle bzw. einen Datentransfer zwischen beiden aufgrund von kommerziellen oder rechtlichen Aspekten bzw. Sicherheitsaspekten nicht zulässt.

Aufgrund der steigenden Komplexität der Fahrzeugtechnik besteht daher ein Bedarf an einer schnellen und zuverlässigen Fehlerursachenbestimmung, insbesondere vor Ort im Pannenfall, außerhalb der Werkstatt und/oder während des Betriebs des Fahrzeuges. Insbesondere wäre es wünschenswert, eine praxistaugliche Lösung für die Fehlerursachenbestimmung zu finden.

Die vorliegende Erfindung wird durch die Gegenstände der unabhängigen Ansprüche definiert. Vorteilhafte Weiterbildungen werden in der nachfolgenden Beschreibung und in den abhängigen Ansprüchen beschrieben.

Gemäß einem ersten Aspekt wird ein Verfahren bereitgestellt. Das Verfahren wird durchgeführt durch eine Diagnosevorrichtung, welche ausgestaltet ist, über eine fahrzeugseitige Diagnoseschnittstelle mit mindestens einem fahrzeugseitigen Steuergerät und über eine erste Kommunikationsverbindung, insbesondere eine erste drahtlose Nahfeldverbindung, mit einem mobilen Endgerät zu kommunizieren. Das Verfahren umfasst die Schritte:
- Anfragen und/oder Empfangen von Diagnosedaten von dem mindestens einen fahrzeugseitigen Steuergerät,
- Senden der Diagnosedaten und/oder von den Diagnosedaten abgeleiteten Daten und/oder einer auf den Diagnosedaten basierenden Diagnosenachricht an eine fahrzeugseitige Benutzerschnittstelle über das mobile Endgerät.

Gemäß einem zweiten Aspekt wird ein Verfahren bereitgestellt. Das Verfahren wird durch ein mobiles Endgerät durchgeführt, welches ausgestaltet ist, über eine erste Kommunikationsverbindung, insbesondere eine erste drahtlose Nahfeldverbindung, mit einer Diagnosevorrichtung und über eine zweite Kommunikationsverbindung, insbesondere eine zweite drahtlose Nahfeldverbindung, mit einer fahrzeugseitigen Benutzerschnittstelle zu kommunizieren. Das Verfahren umfasst die Schritte:
- Anfragen und/oder Empfangen von Diagnosedaten und/oder von den Diagnosedaten abgeleiteten Daten und/oder einer auf den Diagnosedaten basierenden Diagnosenachricht von der mit mindestens einem fahrzeugseitigen Steuergerät verbundenen Diagnosevorrichtung,
- Senden der Diagnosedaten und/oder der von den Diagnosedaten abgeleiteten Daten und/oder der Diagnosenachricht an die fahrzeugseitige Benutzerschnittstelle.

Gemäß einem dritten Aspekt wird ein Verfahren bereitgestellt. Das Verfahren wird durch eine fahrzeugseitige Benutzerschnittstelle durchgeführt, welche ausgestaltet ist, über eine zweite Kommunikationsverbindung, insbesondere eine zweite drahtlose Nahfeldverbindung oder eine drahtgebundene Verbindung, mit einem mobilen Endgerät zu kommunizieren, das Verfahren umfassend die Schritte:
- Empfangen von Diagnosedaten und/oder von den Diagnosedaten abgeleiteten Daten und/oder einer auf den Diagnosedaten basierenden Diagnosenachricht von einer mit mindestens einem fahrzeugseitigen Steuergerät verbundenen Diagnosevorrichtung über das mobile Endgerät,
- Anzeigen der Diagnosedaten und/oder der von den Diagnosedaten abgeleiteten Daten und/oder der Diagnosenachricht.

Die genannten Verfahren gemäß dem ersten Aspekt, dem zweiten Aspekt und dem dritten Aspekt ergänzen sich und sind insbesondere zueinander kompatibel. Insofern können die Merkmale und Abläufe der Verfahren gemäß dem ersten Aspekt, dem zweiten Aspekt und dem dritten Aspekt miteinander kombiniert werden. Im Folgenden wird der Einfachheit halber manchmal auf "das Verfahren" oder "mindestens eines der Verfahren" Bezug genommen. Hierbei ist dem Fachmann klar, dass lediglich eins der Verfahren, mindestens eins, mindestens zwei oder alle drei die Verfahren gemeint sein können.

Empfangen von Daten bzw. Senden von Daten können so ausgelegt werden, dass die Daten direkt von einem Sender oder indirekt von einem ersten Sender über mindestens einen weiteren Sender empfangen werden bzw. dass die Daten direkt an einen Empfänger oder indirekt über mindestens einen weiteren Empfänger an einen letzten Empfänger gesendet werden. Es sei denn, es ist ausdrücklich erwähnt, dass die entsprechenden Daten, Nachrichten, Antworten, Anfragen direkt von einem Sender kommen bzw. direkt an einen Empfänger gesendet werden.

Eine direkte Kommunikationsverbindung besteht üblicherweise zwischen dem fahrzeugseitigen Steuergerät und der Kommunikationsvorrichtung, zwischen der Kommunikationsvorrichtung und dem mobilen Endgerät und/oder zwischen dem mobilen Endgerät und der fahrzeugseitigen Benutzerschnittstelle. Indirekte Verbindungen bestehen somit in der Regel zwischen Einheiten, welche nicht direkt miteinander verbunden sind. Die erste Kommunikationsverbindung und/oder die zweite Kommunikationsverbindung können drahtgebunden oder drahtlos sein. Die erste Kommunikationsverbindung und/oder die zweite Kommunikationsverbindung sind üblicherweise als bidirektionale Kommunikationsverbindungen ausgestaltet. Oftmals werden Daten in Form von Datenpaketen über die genannten Verbindungen ausgetauscht.

Die Kommunikationsvorrichtung und das mobile Endgerät können ausgestaltet sein, über eine bestimmte erste Anwendung (erste App) miteinander zu kommunizieren. Über die erste Anwendung können Daten übertragen werden und Funktionen der Kommunikationsvorrichtung mit dem mobilen Endgerät genutzt werden. Unter Verwendung der ersten Anwendung können bestimmte Funktionen der Kommunikationsvorrichtung ausgeführt werden, während der Benutzer diese über das mobile Endgerät steuern kann.

Die fahrzeugseitige Benutzerschnittstelle und das mobile Endgerät können ausgestaltet sein, über eine bestimmte zweite Anwendung (zweite App) miteinander zu kommunizieren. Über die zweite Anwendung können Daten übertragen werden und Funktionen des mobilen Endgeräts mit der Benutzerschnittstelle genutzt werden. Unter Verwendung der zweiten Anwendung können bestimmte Anwendungsprogramme ("Apps") auf dem mobilen Endgerät ausgeführt werden, während der Benutzer diese über die Benutzerschnittstelle steuern kann.

Die zweite Anwendung ist vorzugsweise eine vom Fahrzeughersteller zertifizierte Anwendung. Beispielhafte zweite Anwendungen umfassen unter anderem die Hella Gutmann App von Hella Gutmann, CarPlay von Apple, Huawei HiCar von Huawei, MirrorLink von Nokia oder Android Auto von Google. Das mobile Endgerät kann also als Kommunikationsbrücke zwischen der Kommunikationsvorrichtung und der Benutzerschnittstelle fungieren. Hierdurch können Funktionen der Kommunikationsvorrichtung mit der Benutzerschnittstelle genutzt werden. Bestimmte Funktionen der Kommunikationsvorrichtung können ausgeführt werden, während der Benutzer diese über die Benutzerschnittstelle steuern kann. Insbesondere können die Diagnosedaten, die von den Diagnosedaten abgeleiteten Daten und/oder die Diagnosenachricht auf der Benutzerschnittstelle angezeigt werden.

Die Kommunikationsvorrichtung und das mobile Endgerät können als Kommunikationsbrücke für die fahrzeugseitige Benutzerschnittstelle und die Diagnoseschnittstelle bezeichnet werden.

Das Verfahren kann den zusätzlichen Schritt aufweisen: Durchführen einer Fahrzeugdiagnose basierend auf den Diagnosedaten. Dieser Verfahrensschritt kann zum Beispiel durch die Kommunikationsvorrichtung, das mobile Endgerät oder die fahrzeugseitige Benutzerschnittstelle durchgeführt werden. Mit dem Begriff "Fahrzeugdiagnose" ist nicht notwendigerweise eine komplette Diagnose aller vorliegenden Fehlercodes gemeint. Vielmehr kann die Fahrzeugdiagnose sich auf einzelne Steuergeräte bzw. deren Fehlercodes, zum Beispiel einzelne vom Benutzer selektierte Steuergeräte beschränken.

Aus rechtlicher Sicht ist eine Fahrzeugdiagnose während der Fahrt in herkömmlichen Systemen nicht gestattet, denn der Fahrer soll durch die Benutzung eines fahrzeugexternen Geräts wie eines mobilen Endgeräts oder Fahrzeugdiagnosegeräts nicht abgelenkt werden. Die fahrzeugseitige Benutzerschnittstelle ist andererseits auch in herkömmlichen Systemen extra dafür ausgelegt, dass der Fahrer sie auch während der Fahrt nutzen darf. Dadurch, dass mit der vorliegenden Schrift eine Wechselwirkung der Benutzerschnittstelle mit der Kommunikationsvorrichtung bzw. den Steuergeräten ermöglicht wird, kann der Benutzer also für eine Fahrzeugdiagnose lediglich auf die Benutzerschnittstelle zurückgreifen. Somit kann eine Fahrzeugdiagnose während der Fahrt durchgeführt werden und dabei können die rechtlichen Vorgaben eingehalten werden. Die Erfindung ermöglicht somit "Diagnosefahrten" oder "Kalibrierfahrten", bei denen eine Fahrzeugdiagnose oder Fahrzeugkalibration während der Fahrt durchgeführt wird.

Der in dieser Schrift verwendete Begriff "Benutzer" kann zum Beispiel Fahrer, Fahrzeuginsasse, Beifahrer oder Monteur umfassen oder sein.

Das Verfahren gemäß dem ersten oder zweiten Aspekt kann zusätzlichen Schritt aufweisen:
- Empfangen einer ersten Nachricht von der fahrzeugseitigen Benutzerschnittstelle,
- Weiterleiten der ersten Nachricht an das fahrzeugseitige Steuergerät.

Die erste Nachricht kann einen Befehl zum Auslesen, Schreiben und/oder Ändern von Daten, Einstellungen und/oder Programmen im fahrzeugseitigen Steuergerät aufweisen.

Optional können in mindestens einem der oben genannten Verfahren der folgende Schritte vorgesehen sein:
- Empfangen einer Benutzereingabe,
- Generieren einer zweiten Nachricht basierend auf dem Benutzereingabe,
- Senden der zweiten Nachricht an das fahrzeugseitige Steuergerät.

Diese Schritte können durch die Benutzerschnittstelle, das mobile Endgerät und/oder die Kommunikationsvorrichtung durchgeführt werden.

Hierbei kann die zweite Nachricht kann einen Befehl zum Auslesen, Schreiben und/oder Ändern von Daten, Einstellungen und/oder Programmen im fahrzeugseitigen Steuergerät aufweisen. Die genannte zweite Nachricht kann zusätzlich oder alternativ zur ersten Nachricht vorgesehen sein. Manchmal sind beide Nachrichten auch identisch.

Bevor die Diagnosedaten, die von den Diagnosedaten abgeleiteten Daten und/oder die Diagnosenachricht gesendet werden, zum Beispiel durch die Kommunikationsvorrichtung oder das mobile Endgerät gesendet oder weitergeleitet werden, können sie zwischengespeichert oder gepuffert werden, beispielsweise in einer Speichereinheit der Kommunikationsvorrichtung oder des mobilen Endgeräts. Die Daten können also mit einer Zeitverzögerung an das mobile Endgerät oder die Benutzerschnittstelle gesendet oder weitergeleitet werden. Die Zeitverzögerung kann hierbei im Bereich von Sekunden, Stunden oder Tagen liegen. Falls zum Beispiel eine der Kommunikationsverbindungen (erste oder zweite Kommunikationsverbindung) im Moment nicht vorliegt, kann mit dem Senden bzw. Weiterleiten der Daten gewartet werden, bis die Kommunikationsverbindung hergestellt wurde. Bevor die Diagnosedaten, die von den Diagnosedaten abgeleiteten Daten und/oder die Diagnosenachricht gesendet oder weitergeleitet werden, können sie in der Kommunikationsvorrichtung oder dem mobilen Endgerät aufbereitet und/oder ausgewertet werden. So kann die Kommunikationsvorrichtung unabhängig von dem mobilen Endgerät Diagnosedaten auswerten und zum Beispiel später bei Bedarf bereitstellen. Das mobile Endgerät kann unabhängig von der Kommunikationsvorrichtung Diagnosedaten auswerten und zum Beispiel später bei Bedarf bereitstellen. Die ausgewerteten Diagnosedaten oder Ergebnisse dieser Auswertung können als "von den Diagnosedaten abgeleitete Daten" aufgefasst werden. Weiter können Daten basierend auf den Diagnosedaten aufbereitet oder erzeugt werden, z.B. in Form von Bild- oder Graphikdateien. Diese aufbereiteten bzw. erzeugten Daten können auch als von den Diagnosedaten abgeleitete Daten interpretiert werden. Manchmal sind die Rohdaten, also die Diagnosedaten von dem mindestens einen Steuergerät, nicht kompatibel mit der Benutzerschnittstelle oder mit dem mobilen Endgerät. So kann das Format oder die Art der Kommunikationsverbindung nicht kompatibel sein. In solchen Fällen können die Diagnosedaten vor dem Weiterleiten an die jeweilige Einheit aufbereitet werden, sodass die empfangende Einheit die aufbereiteten Daten lesen oder bearbeiten kann. Die Kommunikationsvorrichtung und/oder das mobile Endgerät können also ausgebildet sein, die Diagnosedaten oder davon abgeleiteten Daten auszuwerten und Anhand der Auswertung eine bestimmte Aktion durchzuführen oder eine Nachricht abzusetzen.

Mindestens einer der Schritte, eine Vielzahl der Schritte oder sämtliche Schritte der oben beschriebenen Verfahren können während des Betriebs des Fahrzeuges und/oder während der Fahrt durchgeführt werden.

Oftmals weist das Fahrzeug eine Vielzahl von Steuergeräten auf. Die Kommunikation kann auf eine bestimmte Gruppe von Steuergeräten aus der Vielzahl von Steuergeräten, insbesondere nicht sicherheitsrelevante Steuergeräte, beschränkt sein. Alternativ oder zusätzlich kann die Kommunikation mit bestimmten Steuergeräten lediglich in einem vorbestimmten Betriebszustand des Fahrzeuges möglich sein. Entsprechend kann die Fahrzeugdiagnose auch nur für diese Steuergeräte und/oder nur in diesem vorbestimmten Betriebszustand möglich sein. Beispielsweise werden Steuergeräte, die mit dem Bremssystem zusammenhängen, üblicherweise als sicherheitsrelevant eingestuft, wodurch eine Kommunikation bzw. Fahrzeugdiagnose mit diesen Steuergeräten nicht möglich ist. Wenn andererseits das Fahrzeug parkt, können Kommunikation und/oder Fahrzeugdiagnose mit diesen Steuergeräten erlaubt werden, da dieser Fahrzeugzustand sicher ist.

Die oben genannten Diagnosedaten können Fehlercodes, Fahrzeugsensormesswerte, Steuergeräteeinstellungen, Steuergeräteinformation und/oder Betriebsparameter des Steuergerätes umfassen. Die Diagnosenachricht kann ein Diagnoseergebnis, eine Handlungsempfehlung oder Aufforderung an den Fahrer aufweisen.

Die Kommunikationsvorrichtung kann ausgebildet sein, basierend auf den Diagnosedaten eine Nachricht zu triggern. Die Kommunikationsvorrichtung kann ausgebildet sein, aktiv Diagnosedaten oder Nachrichten zu analysieren, und Anhand der Analyse gezielt Mitteilungen oder Aktionen abzusetzen. Beispielhaft überschreitet (oder unterschreitet) ein über die Kommunikationsvorrichtung empfangener Parameter einen Grenzwert. Aufgrund dieser Überschreitung bzw. Unterschreitung wird eine Mitteilung zum mobilen Endgerät weitergeleitet und/oder zur weiteren Analyse in der Kommunikationsvorrichtung abgespeichert.

Es kann vorgesehen sein, dass die erste drahtlose Nahfeldverbindung und/oder die zweite drahtlose Nahfeldverbindung als WiFi-Verbindung und/oder Bluetooth-Verbindung ausgestaltet sind. Durch die kurze und lokale Datenverbindung von Kommunikationsvorrichtung zum mobilen Endgerät (P2P) über die erste Kommunikationsverbindung, und vom mobilen Endgerät zur Benutzerschnittstelle über die zweite Kommunikationsverbindung ist der Datenschutz der Nutzungsdaten erheblich sicherer als über eine Mobilfunk-Verbindung. Bevor das Steuergerät eine bestimmte Aktion durchführt, kann eine Freigabe z.B. vom Benutzer verlangt werden. Eine entsprechende Nachricht kann dann an den Benutzer geschickt werden, also an die Benutzerschnittstelle und/oder das mobile Endgerät. Die Freigabe kann der Benutzer am mobilen Endgerät oder an der Benutzerschnittstelle erteilen, woraufhin die Freigabe an das Steuergerät geschickt wird, und das Steuergerät die bestimmte Aktion durchführen darf.

Gemäß einem vierten Aspekt wird eine Kommunikationsvorrichtung vorgeschlagen, welche insbesondere ausgestaltet ist zum Durchführen des Verfahrens gemäß dem ersten Aspekt. Die Kommunikationsvorrichtung kann alternativ auch als Diagnosevorrichtung bezeichnet werden.

Gemäß einem fünften Aspekt wird ein mobiles Endgerät vorgeschlagen, welches insbesondere ausgestaltet ist zum Durchführen des Verfahrens gemäß dem zweiten Aspekt.

Gemäß einem sechsten Aspekt wird eine fahrzeugseitige Benutzerschnittstelle vorgeschlagen, welche insbesondere ausgestaltet ist zum Durchführen des Verfahrens gemäß dem dritten Aspekt.

In der vorliegenden Schrift wird also auf die Kommunikation zwischen verschiedenen Einheiten im, am oder beim Fahrzeug eingegangen. Die Einheiten betreffen unter anderem ein fahrzeugseitiges Steuergerät, eine Diagnosevorrichtung, ein mobiles Endgerät und eine fahrzeugseitige Benutzerschnittstelle, welche im Folgenden kurz erläutert werden.

Beispielsweise ist oder umfasst das fahrzeugseitige Steuergerät mindestens ein Antriebssteuergerät zum Steuer von Antriebskomponenten des Fahrzeuges wie Motor oder Getriebe, ein sicherheitsrelevantes Steuergerät, welches mit dem Lenken oder Bremsen des Fahrzeuges zusammenhängt, Komfortsteuergerät zum Steuern von Komfortsystemen wie Heizung oder Klimaanlage, Bordnetzsteuergerät, Gateway, oder dergleichen.

Die Kommunikationsvorrichtung kann mit einer fahrzeugseitigen Diagnoseschnittstelle verbindbar sein, insbesondere elektrisch, mechanisch und/oder drahtlos. Die Kommunikationsvorrichtung ist in der Regel ausgestaltet zum Empfangen von Diagnosedaten von dem fahrzeugseitigen Steuergerät. Die Kommunikationsvorrichtung kann einen Stecker, insbesondere Dongle oder Zugriffschutzstecker, zum mechanischen und elektrischen Verbinden mit der fahrzeugseitigen Diagnoseschnittstelle aufweisen. Je nach Anwendungsfall kann die Diagnoseschnittstelle kann hierbei als Hardware und/oder Software ausgeprägt sein. Bei der Steckverbindung überwiegt der Hardwareanteil, bei einer drahtlosen Verbindung überwiegt typischerweise der Softwareanteil der Diagnoseschnittstelle.

Der Stecker kann direkt an einem Gehäuse der Kommunikationsvorrichtung vorgesehen sein, zum Beispiel im Falle eines Dongles. Alternativ kann der Stecker auch mittels eines Verlängerungskabels mit weiteren Komponenten der Kommunikationsvorrichtung verbunden sein, zum Beispiel im Falle des dedizierten Fahrzeugdiagnosegeräts. In manchen Fällen kann alternativ oder zusätzlich eine drahtlose Kommunikationsverbindung der Kommunikationsvorrichtung mit dem Fahrzeug und den Steuergeräten möglich sein, zum Beispiel eine Drahtlos-Nahverbindung wie Bluetooth oder WiFi. Die Kommunikationsvorrichtung kann ausgestaltet sein, nach außengehende Datenströme der fahrzeugseitigen Steuereinheiten zu verarbeiten und/oder zum Fahrzeug gehende Datenströme von externen Einheiten zu verarbeiten, insbesondere wenn die Kommunikationsvorrichtung als OBD-Dongle vorliegt. Die Kommunikationsvorrichtung kann eine erste Sende- und Empfangseinheit und eine zweite Sende- und Empfangseinheit aufweisen, welche einerseits für die Kommunikation bzw. Datenstrom zum Fahrzeug hin bzw. andererseits für die Kommunikation bzw. Datenstrom aus dem Fahrzeug heraus vorgesehen sind.

Das mobile Endgerät kann ein mobiles Telefon, Smartphone, Smartwatch, Laptop, Computer, Tablet-PC oder dergleichen sein oder umfassen. Das mobile Endgerät kann durch ein Identifikationsmerkmal, z.B. IMEI (international mobile equipment identity), eindeutig identifiziert werden. Das mobile Endgerät kann kommunikativ mit der Diagnosevorrichtung verbunden sein, z.B. drahtlos wie über Bluetooth oder WiFi und/oder drahtgebunden, zum Beispiel über USB. Weiter kann das mobile Endgerät über eine Luftschnittstelle mit einem Mobilfunknetzwerk verbunden sein. Hierbei kann das Mobilfunknetzwerk zum Beispiel nach einem der Standards G1, G2, G3, G4, G5, G6 oder höher konfiguriert sein.

Die fahrzeugseitige Benutzerschnittstelle ist typischerweise ausgestaltet, eine Interaktion des Fahrers mit dem Fahrzeug bzw. Komponenten des Fahrzeuges zu ermöglichen. Die fahrzeugseitige Benutzerschnittstelle kann einen Bildschirm, vorzugsweise einen berührungsempfindlichen Bildschirm, und/oder eine Eingabeeinheit bzw. mindestens ein Eingabeelement für einen Benutzer aufweisen. Die fahrzeugseitige Benutzerschnittstelle ist vorzugsweise als Infotainmentsystem ausgestaltet. Über die Eingabeeinheit kann die fahrzeugseitige Benutzerschnittstelle eine Benutzereingabe empfangen. Weiter kann eine Ausgabeeinheit vorgesehen sein, zum Beispiel für eine visuelle Ausgabe in Form eines Bildschirms und/oder eine auditive Ausgabe in Form eines Lautsprechers. Es kann auch eine kombinierte Eingabe- und Ausgabeeinheit vorgesehen sein, zum Beispiel in Form eines berührungsempfindlichen Bildschirms. Die Benutzereingabe bedeutet z.B. die manuelle Eingabe eines Benutzers oder auch ferngesteuerte Aktion, wie Radio/Zündung an, oder Dongle einstecken, oder Bluetooth Pairing. Die fahrzeugseitige Benutzerschnittstelle kann als fahrzeugseitiges mobiles Endgerät ausgestaltet sein. In diesem Fall kann das fahrzeugseitige mobile Endgerät über eine Luftschnittstelle mit einem Mobilfunknetzwerk verbunden sein. Hierbei kann das Mobilfunknetzwerk zum Beispiel nach einem der Standards G1, G2, G3, G4, G5, G6 oder höher konfiguriert sein. Das fahrzeugseitige mobile Endgerät kann durch ein Identifikationsmerkmal, z.B. IMEI (international mobile equipment identity), eindeutig identifiziert werden.

Gemäß einem weiteren Aspekt wird ein System vorgeschlagen, welches die Diagnosevorrichtung, das mobile Endgerät und/oder die Benutzerschnittstelle aufweist.

Gemäß einem weiteren Aspekt wird ein Computerprogramm mit Programmcodemitteln bereitgestellt. Das Computerprogramm ist dazu eingerichtet, ein Verfahren gemäß einem der obigen Aspekte auszuführen, wenn das Computerprogramm auf einer Recheneinheit, insbesondere einer Recheneinheit in der Kommunikationsvorrichtung, dem mobilen Endgerät, der Benutzerschnittstelle, ausgeführt wird.

Gemäß einem weiteren Aspekt wird ein maschinenlesbares Speichermedium mit einem darauf gespeicherten Computerprogramm bereitgestellt.

Durch die Verwendung der bereits vorhandenen Infrastruktur (Benutzerschnittstelle, Kommunikationsvorrichtung, mobiles Endgerät) können die beschriebenen Verfahren in vorteilhafter Weise sowohl kostengünstig als auch unter Beachtung bestehender Sicherheitsanforderungen durchgeführt werden.

Die in dieser Schrift beschriebene Technologie ermöglicht unter anderem folgende Aspekte und kann folgende Vorteile haben:
- Datensicherheit durch kurze Datenübertragungsstrecken. Datenhoheit obliegt dem Benutzer/Fahrer bis zu dessen Freigabe.
- Daten können in granulierter Weise prozessiert und übertragen werden.
- Nutzung des Infotainmentsystems zur (rechtlich) sicheren Kommunikation zum Fahrer.
- Autonome Datenauslese und kurzfristige Datenspeicherung gegeben.
- Kostengünstigeres Datenprozessing gegenüber Cloud Lösungen (kein DATA PLAN notwendig)
- Diese Technologie ermöglicht das Prozessieren von spezifizierte Funktionen (z.B. gezieltes Auslesen von Daten aus dem FZ, )
- Date-/Mobilnetz unabhängige Nutzung möglich durch Datenpufferung
- Datendarstellung mit niederer Latenzzeit, da die Daten nur zwischen OBD-Smartphone-Infotainmentsystem übertragen werden.
- Fahrzeughersteller unabhängige Auslese der Diagnosedate/Parameter möglich. Keine Freigabe der Datenanzeige durch OEM notwendig.
- Future Proof, da der Zugang zum OBD Stecker von mehreren Lösungen genutzt werden kann.
- Der Dongle kann auch Plattform für alle möglichen Services digitaler Datendienste genutzt werden (Treuhänderplattform (Dongle-und Smartphone-APP).
- Diagnoselösungen/Tools/Smartphones dürfen währen der Fahrt nicht genutzt werden. Wenn man eine Visualisierung auf das im Fahrzeugbefindliche Display ermöglicht, darf eine Nutzung/Bedienung aus rechtlicher Sicht stattfinden.
- Wenn man für die Nutzung von Funktionen die Freigaben vom Fahrzeugnutzer benötigt, kann dies über das Display im Fahrzeug stattfinden.
- Es wird eine Verbindung zwischen Fahrzeug Infotainment und Fahrzeug-Diagnosebus geschaffen, welche die Möglichkeit schafft, alle möglichen Apps in einem Fahrzeug zu installieren mit unterschiedlichsten Anwendungen.
- Eine Interaktion zwischen Infotainment/Anwendungsapplikation und User (Fahrer) kann und darf neben der Anzeige während der Fahrt stattfinden.
- Rechtliche Rahmenbedingungen für die Nutzung von Geräten während der Fahrt werden mit dieser Technologie sichergestellt (bedienbare Geräte, die zum Zeitpunkt der Fahrzeug-Abnahme installiert sind, dürfen während der Fahrt bedient werden).

Im Folgenden werden Ausführungsformen der Erfindung anhand beigefügter Figuren näher erläutert. Hierbei sind die Figuren schematisiert und teilweise vereinfacht. Gezeigt werden in
- Fig. 1: eine schematische Darstellung eines Fahrzeuges und einer mit dem Fahrzeug verbundenen Kommunikationsvorrichtung zum Durchführen einer Fahrzeugdiagnose;
- Fig. 2: eine schematische Darstellung eines Fahrzeuges, einer mit dem Fahrzeug verbundenen Kommunikationsvorrichtung und eines mobilen Endgeräts;
- Fig. 3: eine schematische Darstellung eines Kommunikationsablaufs zwischen einem Fahrzeug, einer Kommunikationsvorrichtung, einem mobilen Endgerät und einer fahrzeugseitigen Benutzerschnittstelle.

In den Figuren sind wiederkehrende Merkmale mit denselben Bezugszeichen versehen.

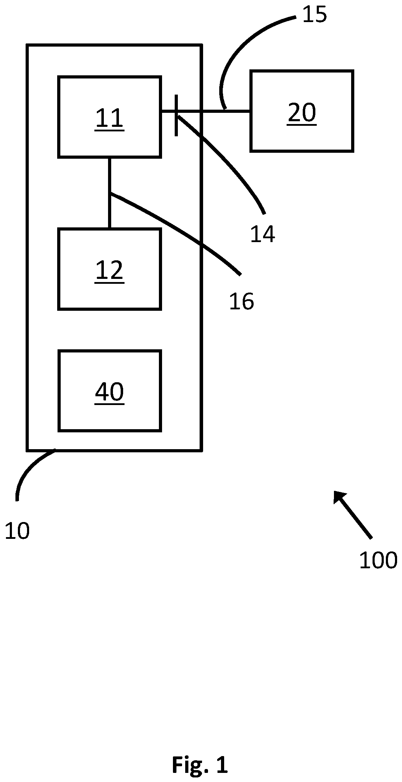

Die Fign. 1-2 zeigen schematisch Darstellungen von verschiedenen Systemen 100 zum Durchführen einer Diagnose eines Fahrzeuges 10 (Fahrzeugdiagnose). Bei dem Fahrzeug 10 kann es sich zum Beispiel um einen Personenkraftwagen, ein Motorrad, einen Lastkraftwagen oder Ähnliches handeln. Das Fahrzeug 10 weist eine Vielzahl von Steuergeräten 11, 12 auf, z.B. mindestens 10 oder mehr. Viele der oder sämtliche Steuergeräte 11, 12 sind jeweils mindestens einer Fahrzeugkomponente zugeordnet. Die zunehmende Vernetzung von Steuergeräten 11, 12 in heutigen Kraftfahrzeugen bietet immer bessere Einwirkungsmöglichkeiten auf Funktionalitäten im Fahrzeug 10, z.B. bessere Diagnosemöglichkeiten im Fehlerfall oder Möglichkeiten zur Fernbedienung von Fahrzeugkomponenten und/oder Funktionen des Fahrzeugs 10. Üblicherweise sind die Steuergeräte 11, 12 miteinander z.B. über ein Fahrzeugbussystem 16, typischerweise ein CAN-Bussystem, verbunden. Hierbei kann das Steuergerät 11 in Fig. 1 repräsentativ für eine erste Gruppe von Steuergeräten 11 sein. Das zweite Steuergerät 12 in Fig. 1 kann repräsentativ für eine zweite Gruppe von Steuergeräten 12 sein.

Die Steuergeräte 11, 12 sind üblicherweise jeweils mit mindestens einem oder einer Vielzahl von Sensoren verbunden, die während des Betriebs des Fahrzeuges 10 Messwerte oder Betriebsparameter erfassen. Denkbare Sensormessgrößen umfassen beispielsweise eine Kühlmitteltemperatur, eine Motortemperatur, eine Öltemperatur, eine Fahrzeuggeschwindigkeit, eine Motordrehzahl, ein Motordrehmoment, eine Umgebungstemperatur (Außentemperatur), einen Umgebungsluftdruck, einen Ladedruck eines Abgasturboladers des Antriebsmotors, einen eingelegten Gang eines Getriebes des Fahrzeugs 10, einen elektrischen Strom, eine elektrische Spannung, einen elektrischen Widerstand usw.. Falls ein durch einen Sensor gemessener Messwert einen bestimmten Sollwertbereich je nach Sensorgröße unter- oder überschreitet, erzeugt das entsprechende Steuergerät 11, 12 oftmals einen Fehlercode, der üblicherweise in einem Speicher des jeweiligen Steuergeräts 11, 12 gespeichert wird. Der Fehlercode ist einem Fehlerzustand zugeordnet und beinhaltet beispielsweise eine Kennziffer zur Identifikation von Fehlfunktionen, die während des Betriebs eines Fahrzeugs auftreten können. Der Fehlercode wird auch als Diagnosefehlercode oder Diagnostic Trouble Code (DTC) bezeichnet. Außerdem können die Steuergeräte 11, 12 direkt oder zumindest indirekt, z.B. über das Fahrzeugbussystem 16 wie CAN-Bussystem 16, mit einer Fahrzeugdiagnoseschnittstelle 14 verbunden sein. Statt auf einzelne Komponenten 11, 12 des Fahrzeuges 10 wird nachstehend der Einfachheit halber manchmal lediglich auf das Fahrzeug 10 Bezug genommen.

Das System 100 beinhaltet zumindest die Einheiten 20, 30 und 40, auf welche im Folgenden genauer eingegangen wird.

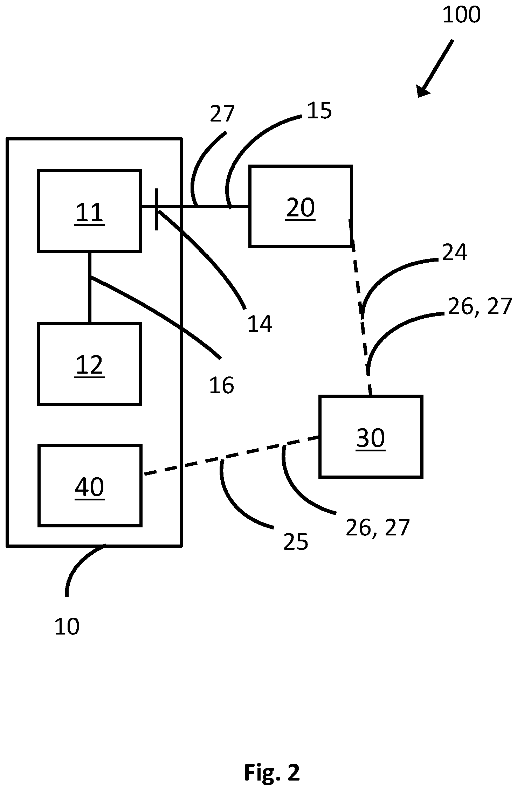

Die Figuren 1 und 2 zeigen eine Kommunikationsvorrichtung 20, die typischerweise eine Steuer- und Verarbeitungseinheit, einen Speicher sowie mindestens eine Empfangs- und Sendeeinheit umfasst. Die Kommunikationsvorrichtung 20 wird im Folgenden manchmal auch als Diagnosevorrichtung 20 bezeichnet. Üblicherweise kann die Diagnosevorrichtung 20 mittels Signalleitungen 15 (also drahtgebunden) an die Fahrzeugdiagnoseschnittstelle 14 des Fahrzeuges 10 angeschlossen werden, und somit mit dem CAN-Bussystem 16 und den Steuergeräten 11, 12 in Verbindung stehen.

In manchen Ausführungsformen ist die Diagnosevorrichtung 20 als dediziertes Fahrzeugdiagnosegerät ausgestaltet und als solches ausgebildet, eine Diagnose des Fahrzeuges 10 zumindest teilweise oder vollständig durchzuführen.

In manchen Ausführungsformen kann die Diagnosevorrichtung 20 als OBD-Dongle ausgestaltet sein, welche vorrangig eine Kommunikation zwischen dem Fahrzeug 10 und einer externen Einheit 30 vermittelt, vgl. Fig. 2. Die in dieser Schrift verwendete Abkürzung OBD steht hierbei für "on-board diagnosis". Aber neben der Kommunikation kann der OBD-Dongle 20 auch weitere Funktionen, wie Bearbeiten oder Auswerten der Diagnosedaten oder Generieren von Nachrichten, Befehlen usw., übernehmen.

Die Kommunikationsvorrichtung 20 weist typischerweise einen Stecker auf, der mit der Fahrzeugdiagnoseschnittstelle 14 kompatibel ist und in diese eingesteckt werden kann. Beim Verbinden des Steckers mit der Fahrzeugdiagnoseschnittstelle 14 werden beide elektrisch und mechanisch miteinander verbunden. Der Stecker kann direkt an einem Gehäuse der Kommunikationsvorrichtung 20 vorgesehen sein, zum Beispiel im Falle eines Dongles/Sticks. Alternativ kann der Stecker auch mittels eines Verlängerungskabels mit weiteren Komponenten der Kommunikationsvorrichtung 20 verbunden sein, zum Beispiel im Falle des dedizierten Fahrzeugdiagnosegeräts.

In manchen Fällen kann alternativ oder zusätzlich eine drahtlose Kommunikationsverbindung der Diagnosevorrichtung 20 mit dem Fahrzeug 10 und den Steuergeräten 11, 12 möglich sein, zum Beispiel eine Drahtlos-Nahverbindung wie Bluetooth oder WiFi/WLAN.

Die Kommunikationsvorrichtung 20 kann ausgestaltet sein, nach außengehende Datenströme der Steuereinheiten 11, 12 zu verarbeiten und/oder zum Fahrzeug 10 gehende Datenströme von externen Einheiten 30, 40 zu verarbeiten, insbesondere wenn die Kommunikationsvorrichtung als OBD-Dongle vorliegt. Die Kommunikationsvorrichtung 20 kann eine erste Sende- und Empfangseinheit und eine zweite Sende- und Empfangseinheit aufweisen, welche einerseits für die Kommunikation bzw. Datenstrom zum Fahrzeug 10 hin bzw. andererseits für die Kommunikation bzw. Datenstrom aus dem Fahrzeug 10 heraus vorgesehen sind. Falls gleiche Kommunikationsprotokolle verwendet werden, kann auch lediglich eine Sende- und Empfangseinheit vorgesehen sein, welche mit den Steuergeräten 11, 12 einerseits und dem mobilen Endgerät 30 andererseits kommuniziert.

Wie in der Fig. 1 gezeigt ist, ist auch lediglich eine Kommunikation zwischen dem Fahrzeug und der Diagnosevorrichtung 20 möglich, also ohne weitere Einheiten 30, 40.

Die Kommunikationsvorrichtung 20 kann über eine erste Kommunikationsverbindung 24 kommunikativ mit dem mobilen Endgerät 30 verbunden sein. Die Kommunikationsverbindung 24, welche die Kommunikationsvorrichtung 20 mit dem mobilen Endgerät 30 verbindet, kann als drahtlose Nahfeldverbindung ausgestaltet sein, beispielsweise Bluetooth oder WiFi/WLAN. Alternativ kann die erste Kommunikationsverbindung 24 auch als drahtgebundene Kommunikationsverbindung zwischen der Kommunikationsvorrichtung 20 und dem mobilen Endgerät 30 vorliegen.

Das mobile Endgerät 30 ist über eine zweite Kommunikationsverbindung 25 mit einer fahrzeugseitigen Benutzerschnittstelle 40 verbunden.

Die fahrzeugseitige Benutzerschnittstelle 40 ist oftmals als Infotainmentsystem ausgebildet. Die fahrzeugseitige Benutzerschnittstelle 40 weist oftmals einen als Ausgabeelement ausgestalteten Bildschirm und/oder mindestens ein Eingabeelement einer Eingabeeinheit für einen Benutzer auf. Falls der Bildschirm als berührungsempfindlicher Bildschirm ausgestaltet ist, können hierüber sowohl Benutzereingaben als auch Ausgaben für den Nutzer stattfinden. Die fahrzeugseitige Benutzerschnittstelle 40 kann als fahrzeugseitiges mobiles Endgerät ausgestaltet sein.

Als Eingabeelemente werden oftmals Tasten und Drehknöpfe eingesetzt. Zudem werden zumeist weitere Bedienungselemente verwendet. Dazu gehören etwa Drehschalter/Drückschalter in der Mittelkonsole oder am Armaturenbrett, Touchscreen, Touchpad und/oder Tasten bzw. Drehschalter am Lenkrad. Moderne fahrzeugseitige Benutzerschnittstellen 40 bzw. Infotainmentsysteme lassen sich auch durch Sprachsteuerung oder Gestensteuerung bedienen. Die Eingabeelemente sind in diesem Fall Kameras oder Mikrofone. Als Infotainmentsystem 40 wird üblicherweise ein System von Komponenten bezeichnet, die verschiedene Komfort- und Sicherheitsfunktionen bereitstellen. Dazu können Klimaanlage, Radio, Multimedia, Navigation und/oder Konnektivitätsfunktionen zählen. Infotainmentsysteme sind üblicherweise konfiguriert, um den Fahrer zu entlasten, informieren und/oder unterhalten.

Die Verbindung zwischen dem Steuergerät 11, 12 und der Benutzerschnittstelle 40 ist üblicherweise absichtlich bzw. gesetzlich eingeschränkt, sodass der Benutzer bzw. Fahrer über die Benutzerschnittstelle 40 keinen Zugriff auf die Diagnosedaten der Steuergeräte 11, 12 hat. Dies soll einerseits vermeiden, dass der Fahrer während der Fahrt abgelenkt wird oder andererseits versehentlich Steuergeräte 11, 12 falsch konfiguriert, was schlimmstenfalls zu einem Defekt während der Fahrt oder gar Unfall führen kann.

Das mobile Endgerät 30 kann über eine Luftschnittstelle mit einem Mobilfunknetzwerk verbunden sein oder werden. Die Luftschnittstelle kann beispielsweise eine Verbindunge mittels eines Mobilfunknetzes gemäß einem der Mobilfunk-Standards G1-G5 oder höher einschließen. Das mobile Endgerät 30 kann durch ein Identifikationsmerkmal, z.B. IMEI (international mobile equipment identity), eindeutig identifizierbar sein.

In manchen Ausführungsformen ist das Steuergerät 11 für den Empfang und das Senden von Daten über das Fahrzeugbussystem 16 innerhalb des Fahrzeuges 10 konfiguriert. Das Steuergerät11 kann zum Beispiel für die Gewährleistung von Sicherheitsfunktionen zuständig sein. Beispielhafte Steuergeräte 11 umfassen ein Bordnetzsteuergerät und/oder ein Gateway. Je nach Hersteller sind das Gateway und/oder das Bordnetzsteuergerät im Fahrzeug 10 vorhanden und bilden zusammen mit der Diagnoseschnittstelle 14 eine Kommunikationsbrücke zwischen dem Fahrzeug 10 und externen Einheiten 20, 30.

Das Gateway ist hierbei üblicherweise als Kommunikationsvorrichtung im Fahrzeug 10 ausgestaltet und ermöglicht eine Kommunikation des Fahrzeuges 10 mit der Außenwelt über die Diagnoseschnittstelle 14. Insbesondere ist also das Gateway eingerichtet, mit der Kommunikationsvorrichtung 20 Daten auszutauschen bzw. zu kommunizieren. Das Gateway kann somit als Datenverteiler für die Kommunikation innerhalb des Fahrzeuges 10 und über die Kommunikationsschnittstelle 14 mit der Außenwelt agieren. Oftmals unterstützt das Gateway unterschiedliche Fahrzeugbussysteme 16 wie Ethernet, CAN, LIN und kann beispielsweise mit einem zusätzlichen Diagnosebussystem verbunden sein. Das Diagnosebussystem kann Bestandteil des Fahrzeugbussystems 16 sein oder zusätzlich zum Fahrzeugbussystem 16 vorliegen und über das Gateway mit dem Fahrzeugbussystem 16 verbunden sein.

Als Bordnetzsteuergerät oder abgekürzt BSG, im Englischen Body Control Module (BCM), bezeichnet man ein oder auch mehrere Steuergeräte im Fahrzeug 10, die unmittelbar elektrische Verbraucher bzw. Teilnehmer am Bordnetz (wie beispielsweise Beleuchtung oder Scheibenwaschanlage) steuern, Daten der Fahrzeugbussysteme 16 (LIN, CAN, Flexray) verarbeiten und/oder auch als Gateway für Diagnosedienste fungieren. Komfortfunktionen wie Sitzheizung oder Ambientelicht werden üblicherweise ebenfalls vom BSG bedient.

Die Diagnosevorrichtung 20, das mobile Endgerät 30 und/oder die fahrzeugseitige Benutzerschnittstelle 40 können jeweils mindestens eine Sende- und Empfangseinheit (Transceiver) aufweisen, um eine Kommunikation mit den anderen Einheiten zu ermöglichen. Die wechselseitige Kommunikation der Einheiten 20, 30, 40 ist in den Figuren 1-2 mittels Linien angedeutet. Hierbei können gestrichelte Linien bedeuten, dass die Kommunikation drahtlos bzw. über eine Luftschnittstelle erfolgt, während durchgezogene Linien auf eine drahtgebundene Kommunikation hinweisen. Statt drahtloser Kommunikation kann auch drahtgebundene Kommunikation stattfinden und andersherum, vgl. Ausführungen oben.

Weiter können die Kommunikationsvorrichtung 20, das mobile Endgerät 30 und/oder die fahrzeugseitige Benutzerschnittstelle 40 jeweils einen Prozessor aufweisen, um Diagnosedaten auszuwerten und/oder aufzubereiten. Über die Sende- und Empfangseinheit der Einheiten 20, 30, 40 können die Diagnosedaten empfangen werden und anschließend ausgewertet werden, oder weitergeleitet werden, sodass die Auswertung der Diagnosedaten oder Aufbereitung der Diagnosedaten in einer anderen Einheit stattfinden kann.

Das Verfahren kann während des Betriebs des Fahrzeuges 10 und/oder während einer Fahrt durchgeführt werden. Alternativ kann das Verfahren auch in der Werkstatt oder an einem anderen Ort durchgeführt werden. Nachstehend werden die Schritte des Verfahrens näher erläutert.

Über die Diagnoseschnittstelle 14 wird eine Kommunikationsverbindung 15 zwischen dem Fahrzeug 10 und der Kommunikationsvorrichtung 20 hergestellt (S5). Mithilfe der Kommunikationsverbindung 15 können nun Diagnosedaten von den Steuergeräten 11, 12 an externe Einheiten 20, 30 gesandt werden, die nicht Bestandteil des Fahrzeuges sind.

Nach oder vor oder gleichzeitig mit dem Herstellen der Kommunikationsverbindung 15 wird eine erste Kommunikationsverbindung 24 zwischen der Kommunikationsvorrichtung 20 und dem mobilen Endgerät 30 aufgebaut (S10).

Danach - oder davor oder gleichzeitig - wird eine zweite Kommunikationsverbindung zwischen dem mobilen Endgerät 30 und der Benutzerschnittstelle 40 aufgebaut (S20). Der Aufbau der ersten Kommunikationsverbindung 24 kann den Aufbau der zweiten Kommunikationsverbindung 25 automatisch auslösen oder andersherum. Alternativ kann auch vorgesehen sein, dass die zweite Kommunikationsverbindung 25 durch ein weiteres Ereignis ausgelöst wird, zum Beispiel eine Eingabe des Benutzers an der Benutzerschnittstelle 40. Alternativ kann die zweite Kommunikationsverbindung 25 bereits vor Aufbau der ersten Kommunikationsverbindung 24 bestehen. Zum Beispiel kann die zweite Kommunikationsverbindung 25 automatisch hergestellt werden, wenn der Fahrer mit seinem mobilen Endgerät in der Nähe des Fahrzeuges 10 ist bzw. das Fahrzeug 10 betritt.

Die Kommunikationsverbindungen 15, 24, 25 sind in der Regel als bidirektionale Kommunikationskanäle ausgestaltet, sodass Nachrichten und Daten über diese Verbindungen 15, 24, 25 verschickt und ausgetauscht werden können. Die Kommunikationsverbindungen 15, 24, 25 ermöglichen damit eine Kommunikationsverbindung 26 zwischen der Kommunikationsvorrichtung 20 und der fahrzeugseitigen Benutzerschnittstelle 40 über das mobile Endgerät 30 sowie eine Kommunikationsverbindung 27 zwischen den fahrzeugseitigen Steuergeräten 11, 12 und der fahrzeugseitigen Benutzerschnittstelle 40 über die Kommunikationsvorrichtung 20 und das mobile Endgerät 30.

Jetzt sind die Kommunikationsvorrichtung 20 und das mobile Endgerät 30 in der Lage, eine Kommunikation zwischen dem Fahrzeug 10, insbesondere den fahrzeugseitigen Steuergeräten 11, 12, und der fahrzeugseitigen Benutzerschnittstelle 40 über Kommunikationsverbindungen 26, 27 zu vermitteln. So können die Einheiten 20, 30 mittels der bidirektionalen Kommunikationskanäle 15, 24, 25 Diagnosedaten, von den Diagnosedaten abgeleitete Daten oder Nachrichten von dem fahrzeugseitigen Steuergeräten 11, 12 an die Benutzerschnittstelle 40 weiterleiten und andersherum. Die Diagnosedaten können beispielsweise Fehlercodes, Fahrzeugsensormesswerte, Steuergeräteeinstellungen, Steuergeräteinformation und/oder Betriebsparameter des Steuergerätes 11, 12 umfassen. Vor dem Versenden bzw. Weiterleiten der Diagnosedaten können diese ausgelesen, aufbereitet, in Datenpakete verpackt, mit anderen Daten korreliert oder kombiniert, ausgewertet, codiert, verschlüsselt oder entschlüsselt werden, sodass hierdurch von den Diagnosedaten abgeleitete Daten erzeugt werden, welche dann an die nächste Einheit 30, 40 versandt oder weitergeleitet werden können.

Die Diagnosedaten, die von den Diagnosedaten abgeleiteten Daten oder die Diagnosenachricht können vor dem Versenden in einem Speicher einer der Einheiten 20 oder 30 zwischengespeichert bzw. gepuffert werden. Die Daten können also mit einer Zeitverzögerung an das mobile Endgerät 30 oder die Benutzerschnittstelle 40 gesendet oder weitergeleitet werden. Die Zeitverzögerung kann hierbei im Bereich von Sekunden, Stunden oder Tagen liegen. Falls zum Beispiel eine der Kommunikationsverbindungen 24, 25, 26 oder 27 im Moment nicht vorliegt, kann mit dem Senden bzw. Weiterleiten der Daten gewartet werden, bis die Kommunikationsverbindung 24, 25, 26 oder 27 hergestellt wurde.

Die Kommunikationsvorrichtung 20 führt die folgenden Schritte durch:
- Anfragen S40 und Empfangen S41 von Diagnosedaten von dem mindestens einen fahrzeugseitigen Steuergerät 11, 12,
- Senden S42 der Diagnosedaten und/oder von den Diagnosedaten abgeleiteten Daten und/oder einer auf den Diagnosedaten basierenden Diagnosenachricht an die fahrzeugseitige Benutzerschnittstelle 40 über das mobile Endgerät 30.

Die in dieser Schrift genannte Diagnosenachricht kann eine Diagnoseergebnis, z.B. Fahrzeugbatterie fehlerhaft oder Scheibenwischer defekt, eine Handlungsempfehlung oder Aufforderung an den Fahrer, z.B. Reifenwechsel, Nachfüllen von Öl oder Kühlflüssigkeit, Fahrzeugbatteriewechsel oder Werkstatt Aufsuchen, aufweisen.

Der Schritt des Sendens S42 beinhaltet typischerweise auch das Weiterleiten der Diagnosedaten durch das mobile Endgerät 30 an die fahrzeugseitige Benutzerschnittstelle 40.

Das Anfragen S40 der Diagnosedaten kann auch durch das mobile Endgerät 30 initiiert werden, sodass das Verfahren in diesem Fall folgende Schritte aufweist:
- Anfragen S50 und Empfangen S51 von Diagnosedaten und/oder von den Diagnosedaten abgeleiteten Daten und/oder einer auf den Diagnosedaten basierenden Diagnosenachricht von der mit mindestens einem fahrzeugseitigen Steuergerät 11, 12 verbundenen Kommunikationsvorrichtung 20,
- Senden S52 der Diagnosedaten und/oder der von den Diagnosedaten abgeleiteten Daten und/oder der Diagnosenachricht an die fahrzeugseitige Benutzerschnittstelle 40.

Der Schritt des Anfragens S50 beinhaltet typischerweise auch das Weiterleiten der Anfrage an das Steuergerät 11, 12 durch die Kommunikationsvorrichtung 20. Analog enthält der Schritt des Empfangens S51 typischerweise auch das Weiterleiten der Diagnosedaten durch die Kommunikationsvorrichtung 20 an das mobile Endgerät 30.

Die Schritte S40, S41, S42 sind in der Fig. 4 zeitlich vor den Schritten S50, S51, S52 dargestellt. Sie können aber auch nach den Schritten S50, S51, S52 stattfinden.

Das Anfragen S40 oder S50 der Diagnosedaten kann auch durch die Benutzerschnittstelle 40 bzw. eine Eingabe des Benutzers über die Benutzerschnittstelle 40 initiiert werden, sodass das Verfahren in diesem Fall folgende Schritte aufweist:
- Anfragen S60 und Empfangen S61 von Diagnosedaten und/oder von den Diagnosedaten abgeleiteten Daten und/oder einer auf den Diagnosedaten basierenden Diagnosenachricht von dem mindestens einen fahrzeugseitigen Steuergerät 11, 12,

Es sei angemerkt, dass die Einheiten 20, 30, 40 nicht unbedingt eine aktive Anfrage schicken müssen. Sie können auch durch passives Zuhören die Diagnosedaten, die von den Diagnosedaten abgeleiteten Daten und/oder die Diagnosenachricht empfangen. Insofern sind die Schritte S40, S50 und S60 optional.

Nach Empfang der Daten oder Nachricht kann die Benutzerschnittstelle 40 den folgenden Schritt durchführen:
- Anzeigen der Diagnosedaten und/oder der von den Diagnosedaten abgeleiteten Daten und/oder der Diagnosenachricht.

Durch die Anzeige wird der Benutzer informiert und kann der Benutzer die Lage abschätzen bzw. gegebenenfalls eine Aktion durchführen, beispielsweise eine Eingabe an der Benutzerschnittstelle 40 machen. Eine geführte Mensch-Maschine-Interaktion wird hierdurch ermöglicht.

Die Kommunikationsvorrichtung 20 und das mobile Endgerät 30 können folgende Schritte durchführen, welche in der Fig. 7 durch das Bezugszeichen S70 zusammengefasst sind:
- Empfangen einer ersten Nachricht von der fahrzeugseitigen Benutzerschnittstelle 40,
- Weiterleiten der ersten Nachricht an das fahrzeugseitige Steuergerät 11, 12,

Die erste Nachricht kann zum Beispiel einen Befehl zum Auslesen, Schreiben und/oder Ändern von Daten, Einstellungen und/oder Programmen im fahrzeugseitigen Steuergerät 11, 12 aufweisen. Daraufhin kann das fahrzeugseitige Steuergerät 11, 12 zum Beispiel eine Bestätigung an die Benutzerschnittstelle schicken, S71.

Zusätzlich oder alternativ können folgende Schritte vorgesehen sein, welche vorzugsweise durch die Benutzerschnittstelle 40 durchgeführt werden:
- Empfangen einer Benutzereingabe,
- Generieren einer zweiten Nachricht basierend auf dem Benutzereingabe,
- Senden der zweiten Nachricht an das fahrzeugseitige Steuergerät 11, 12,

Diese Schritte können alternativ oder zusätzlich auch durch das mobile Endgerät 30 oder die Kommunikationsvorrichtung 20 durchgeführt werden.

Hierbei kann die zweite Nachricht einen Befehl zum Auslesen, Schreiben und/oder Ändern von Daten, Einstellungen und/oder Programmen im fahrzeugseitigen Steuergerät 11, 12 aufweist. Die zweite Nachricht kann zusätzlich oder alternativ zur ersten Nachricht vorgesehen sein.

Es kann vorgesehen sein, dass die Steuergeräte 11, 12 standardmäßig in einem Datenübertragungsmodus sind, und das ein Zugriff auf die Steuergeräte 11, 12 im Datenübertragungsmodus nicht möglich ist. Zugriff soll dabei heißen, dass Daten, Einstellungen oder Programme im Steuergerät 11, 12, nicht nur gelesen, sondern auch geändert werden können.

Die erste und/oder zweite Nachricht kann auch eine Aktivierungsnachricht umfassen oder sein. Die Aktivierungsnachricht kann einen Zugriff auf das Steuergerät 11, 12 aktivieren bzw. einen Zugriffsmodus der Steuergeräte 11, 12 aktivieren, in dem ein Zugriff auf die Steuergeräte 11, 12 möglich ist. Optional kann vorgesehen sein, dass der Zugriffsmodus erst dann aktiviert wird, wenn zusätzlich eine Zustimmungsnachricht eines Benutzers vorliegt. So kann vorgesehen sein, dass ein Benutzer oder der Fahrzeugführer dem Zugriff auf die Steuergeräte 11, 12 ausdrücklich über eine Eingabe an der Benutzerschnittstelle 40 zustimmen muss. Die Zustimmungsnachricht kann aber auch von dem mobilen Endgerät 30 empfangen werden bzw. dort von dem Benutzer eingegeben werden. Die Aktivierungsnachricht kann zum Beispiel nur in einem bestimmten Fahrzeugzustand an das Steuergerät geschickt werden. Falls zum Beispiel das Fahrzeug 10 fährt, kann ein Zugriff auf sicherheitsrelevante Steuergeräte 11, 12 blockiert sein. Wenn das Fahrzeug stillsteht bzw. geparkt ist, können die Steuergeräte 11, 12 freigegeben werden, sodass ein Zugriff erlaubt ist.

Optional ist folgender Schritt vorgesehen: Wechseln von dem Datenübertragungsmodus in den Zugriffsmodus basierend auf der Aktivierungsnachricht und/oder der Zustimmungsnachricht oder einem Fahrzeugzustand.

Mittels der Zustimmungsnachricht kann sichergestellt werden, dass nur dann ein Fernzugriff mittels des Fernzugriffsservers 40 ermöglicht wird, wenn der Fernzugriff durch einen Benutzer bestätigt und freigegeben wird. Die Zustimmungsnachricht kann vor oder nach Versand der Aktivierungsnacht versandt bzw. empfangen werden.

Mindestens einer der oben Schritte, eine Vielzahl der Schritte oder sämtliche Schritte des oben beschriebenen Verfahrens können während des Betriebs des Fahrzeuges 10 oder sogar während der Fahrt 10 durchgeführt werden. Mit Betrieb des Fahrzeuges 10 ist gemeint, dass das Fahrzeug 10 gestartet ist, aber nicht notwendigerweise fährt.

Der Zugriffsmodus sollte vorzugsweise nur aktiviert sein oder aktiviert werden, wenn sich das Fahrzeug 10 nicht bewegt. Falls nämlich Änderungen an den Steuergeräten 11, 12 im Fahrtbetrieb des Fahrzeuges 10 vorgenommen werden, kann dies die Sicherheit des Fahrzeuges 10 und der Fahrzeuginsassen gefährden. Andererseits kann der Datenübertragungsmodus auch dann aktiviert sein, wenn sich das Fahrzeug 10 bewegt bzw. fährt. Für die Beurteilung, ob sich das Fahrzeug 10 bewegt, können z.B. Motordrehzahlsensor, Tachometer, Bewegungssensoren sowie andere fahrzeugseitige Sensoren im Fahrzeug 10 verwendet werden. Weiter können auch GPS-Daten, Satellitendaten, Funkortungssignalen für die Beurteilung herangezogen werden. Falls festgestellt wird, dass sich das Fahrzeug 10 bewegt, kann der Zugriffsmodus gesperrt sein.

Gemäß einer zusätzlichen oder alternativen Sicherheitsmaßnahme kann der Fahrbetrieb des Fahrzeuges 10 gesperrt werden, solange der Zugriffsmodus aktiviert ist. Erst wenn der Fernzugriff abgeschlossen ist, und die Steuergeräte 11, 12 wieder im Datenübertragungsmodus sind, kann der Fahrbetrieb wieder freigegeben werden.

Es kann vorgesehen sein, dass die Kommunikation auf eine bestimmte Gruppe von Steuergeräten 11, 12 aus der Vielzahl von Steuergeräten 11, 12, insbesondere nicht sicherheitsrelevante Steuergeräte 11, 12, beschränkt ist. Es kann vorgesehen sein, dass die Kommunikation mit bestimmten Steuergeräten 11, 12 lediglich in einem vorbestimmten Betriebszustand des Fahrzeuges möglich ist.

Ziel der Fahrzeugdiagnose ist es, feststellen zu können, wie schwerwiegend eine Fehlfunktion ist, welches Bauteil im Fahrzeug 10 ggf. defekt ist und wie dieses Bauteil repariert werden kann. Um feststellen zu können, welches Bauteil des Fahrzeuges 10 defekt ist, wertet mindestens eine der Einheiten 20, 30, 40 die Fehlercodes aus, welche wie bereits oben beschrieben im laufenden Betrieb des Fahrzeuges 10 über eine Auswertung der Sensormesswerte durch das mindestens eine Fahrzeugsteuergerät 11, 12 erzeugt werden und in einem fahrzeugseitigen Speicher gespeichert werden. Insofern kann mindestens eine der Einheiten 20, 30, 40 eine Fahrzeugdiagnose basierend auf den Diagnosedaten von den Steuergeräten 11, 12 durchführen.

Nach einer entsprechenden Aufforderung sind die Fahrzeugsteuergeräte 11, 12 dazu ausgestaltet, die im Fahrzeug 10 gespeicherten Fehlercodes auszulesen und an die Kommunikationsvorrichtung 20 zu übermitteln. Die Kommunikationsvorrichtung 20 kann also direkt mit dem jeweiligen Fahrzeugsteuergerät 11, 12 kommunizieren, um die benötigten Fehlercodes vom Fahrzeugsteuergerät 11, 12 anzufordern und zu erlangen. Mittels einer Analyse der Fehlercodes kann diagnostiziert werden, ob und welche Fahrzeugkomponenten repariert oder ersetzt werden müssen, um das Problem zu beheben. Somit kann mittels einer Auswertung der Fehlercodes (Fahrzeugdiagnose) eine Aussage darüber getroffen werden, welche Fahrzeugkomponenten defekt sind und eine Reparatur benötigen. Die Auswertung bzw. Analyse der Fehlercodes kann in einer der Einheiten 20, 30, 40 stattfinden.

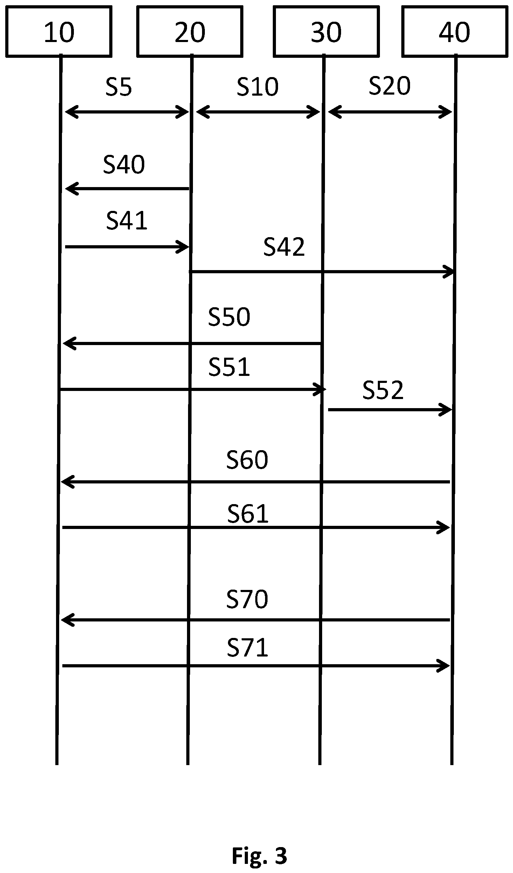

Es versteht sich, dass die in den Figuren 1-3 dargestellten und oben beschriebenen Merkmale bzw. Schritte miteinander kombiniert werden können, sofern sich die Kombinationen nicht gegenseitig ausschließen.

### Bezugszeichenliste

- 10: Fahrzeug
- 11: Fahrzeugsteuergerät
- 12: Fahrzeugsteuergerät
- 14: OBD-Schnittstelle
- 15: Signalleitungen
- 16: Fahrzeugbussystem
- 20: Fahrzeugdiagnosegerät / OBD-Dongle
- 24: erste Kommunikationsverbindung
- 25: zweite Kommunikationsverbindung
- 26: Kommunikationsverbindung
- 27: Kommunikationsverbindung
- 30: mobiles Endgerät
- 40: fahrzeugseitige Benutzerschnittstelle bzw. Infotainmentsystem
- 100: System

## Patentansprüche

1. Verfahren durchgeführt durch eine Kommunikationsvorrichtung (20), welche ausgestaltet ist, über eine fahrzeugseitige Diagnoseschnittstelle (14) mit mindestens einem fahrzeugseitigen Steuergerät (11, 12) und über eine erste Kommunikationsverbindung (24), insbesondere eine erste drahtlose Nahfeldverbindung, mit einem mobilen Endgerät (30) zu kommunizieren, das Verfahren umfassend die Schritte:
- Anfragen (S40) und/oder Empfangen (S41) von Diagnosedaten von dem mindestens einen fahrzeugseitigen Steuergerät (11, 12),
- Senden (S42) der Diagnosedaten und/oder von den Diagnosedaten abgeleiteten Daten und/oder einer auf den Diagnosedaten basierenden Diagnosenachricht an eine fahrzeugseitige Benutzerschnittstelle (40) über das mobile Endgerät (30).

2. Verfahren durchgeführt durch ein mobiles Endgerät (30), welches ausgestaltet ist, über eine erste Kommunikationsverbindung (24), insbesondere eine erste drahtlose Nahfeldverbindung, mit einer Kommunikationsvorrichtung (20) und über eine zweite Kommunikationsverbindung (25), insbesondere eine zweite drahtlose Nahfeldverbindung, mit einer fahrzeugseitigen Benutzerschnittstelle (40) zu kommunizieren, das Verfahren umfassend die Schritte:
- Anfragen (S50) und/oder Empfangen (S51) von Diagnosedaten und/oder von den Diagnosedaten abgeleiteten Daten und/oder einer auf den Diagnosedaten basierenden Diagnosenachricht von der mit mindestens einem fahrzeugseitigen Steuergerät (11, 12) verbundenen Kommunikationsvorrichtung (20),
- Senden (S52) der Diagnosedaten und/oder der von den Diagnosedaten abgeleiteten Daten und/oder der Diagnosenachricht an die fahrzeugseitige Benutzerschnittstelle (40).

3. Verfahren durchgeführt durch eine fahrzeugseitige Benutzerschnittstelle (40), welche ausgestaltet ist, über eine zweite Kommunikationsverbindung (25), insbesondere eine zweite drahtlose Nahfeldverbindung oder eine drahtgebundene Verbindung, mit einem mobilen Endgerät (30) zu kommunizieren, das Verfahren umfassend die Schritte:
- Anfragen (S60) und/oder Empfangen (S61) von Diagnosedaten und/oder von den Diagnosedaten abgeleiteten Daten und/oder einer auf den Diagnosedaten basierenden Diagnosenachricht von einer mit mindestens einem fahrzeugseitigen Steuergerät (11, 12) verbundenen Kommunikationsvorrichtung (20) über das mobile Endgerät (30),
- Anzeigen der Diagnosedaten und/oder der von den Diagnosedaten abgeleiteten Daten und/oder der Diagnosenachricht.

4. Verfahren nach einem der vorstehenden Ansprüche soweit rückbezogen auf Ansprüche 1 und 2, mit dem zusätzlichen Schritt:
- Empfangen einer ersten Nachricht von der fahrzeugseitigen Benutzerschnittstelle (40),
- Weiterleiten der ersten Nachricht an das fahrzeugseitige Steuergerät (11, 12),
wobei die erste Nachricht einen Befehl zum Auslesen, Schreiben und/oder Ändern von Daten, Einstellungen und/oder Programmen im fahrzeugseitigen Steuergerät (11, 12) aufweist.

5. Verfahren nach einem der Ansprüche 1-3 mit dem weiteren Schritt:
- Empfangen einer Benutzereingabe,
- Generieren einer zweiten Nachricht basierend auf dem Benutzereingabe,
- Senden der zweiten Nachricht an das fahrzeugseitige Steuergerät (11, 12),
wobei die zweite Nachricht einen Befehl zum Auslesen, Schreiben und/oder Ändern von Daten, Einstellungen und/oder Programmen im fahrzeugseitigen Steuergerät (11, 12) aufweist.

6. Verfahren nach einem der vorstehenden Ansprüche, wobei mindestens einer der Schritte, eine Vielzahl der Schritte oder sämtliche Schritte während des Betriebs des Fahrzeuges (10) oder während der Fahrt durchgeführt werden.

7. Verfahren nach einem der vorstehenden Ansprüche, wobei das Fahrzeug (10) eine Vielzahl von Steuergeräten (11, 12) aufweist, wobei Kommunikation auf eine bestimmte Gruppe von Steuergeräten (11, 12) aus der Vielzahl von Steuergeräten (11, 12), insbesondere nicht sicherheitsrelevante Steuergeräte (11, 12), beschränkt ist, und/oder wobei die Kommunikation mit bestimmten Steuergeräten (11, 12) lediglich in einem vorbestimmten Betriebszustand des Fahrzeuges (10) möglich ist.

8. Verfahren nach einem der vorstehenden Ansprüche, wobei die Diagnosedaten Fehlercodes, Fahrzeugsensormesswerte, Steuergeräteeinstellungen, Steuergeräteinformation und/oder Betriebsparameter des Steuergerätes (11, 12) umfassen, wobei die Diagnosenachricht ein Diagnoseergebnis, eine Handlungsempfehlung oder Aufforderung an den Fahrer aufweist.

9. Verfahren nach einem der vorstehenden Ansprüche, mit dem zusätzlichen Schritt: Durchführen einer Fahrzeugdiagnose basierend auf den Diagnosedaten.

10. Verfahren nach einem der vorstehenden Ansprüche, wobei die Kommunikationsvorrichtung (20) einen Stecker, insbesondere Dongle oder Zugriffschutzstecker, zum mechanischen und elektrischen Verbinden mit der fahrzeugseitigen Diagnoseschnittstelle (14) aufweist oder wobei die Kommunikationsvorrichtung (20) als dediziertes Fahrzeugdiagnosegerät ausgestaltet ist.

11. Verfahren nach einem der vorstehenden Ansprüche, wobei das mobile Endgerät (30) ein mobiles Telefon, insbesondere Smartphone, Smartwatch, Laptop oder Tablet-PC, ist oder umfasst.

12. Verfahren nach einem der vorstehenden Ansprüche, wobei die fahrzeugseitige Benutzerschnittstelle (40) einen Bildschirm, vorzugsweise einen berührungsempfindlichen Bildschirm, und/oder eine Eingabeeinheit bzw. mindestens ein Eingabeelement für einen Benutzer aufweist, wobei die fahrzeugseitige Benutzerschnittstelle (40) vorzugsweise als Infotainmentsystem ausgestaltet ist.

13. Kommunikationsvorrichtung (20), insbesondere Diagnosevorrichtung, Dongle oder Fahrzeugdiagnosegerät, ausgestaltet zum Durchführen des Verfahrens nach einem der vorangegangenen Ansprüche soweit rückbezogen auf Anspruch 1.

14. Mobiles Endgerät (30), ausgestaltet zum Durchführen des Verfahrens nach einem der vorangegangenen Ansprüche soweit rückbezogen auf Anspruch 2.

15. Fahrzeugseitige Benutzerschnittstelle (40), ausgestaltet zum Durchführen des Verfahrens nach einem der vorangegangen Ansprüche soweit rückbezogen auf Anspruch 3.
